# EUROPEAN PATENT APPLICATION

(11) **EP 4 707 666 A1**
(43) Date of publication of application: **11.03.2026**
(21) Application number: 24887935.5
(22) Date of filing: 05.11.2024
(51) Int. Cl.: F21S 41/675, F21S 41/36, F21S 41/141, F21S 43/14, F21S 43/30, F21V 23/04, F21W 102/135, F21W 103/10, F21W 103/60, F21W 107/10, F21Y 115/10

(54) **VEHICLE LIGHTING LAMP AND LIGHTING CONTROL METHOD THEREFOR**

(30) Priority: 08.11.2023 CN 202311480394
(71) Applicant: Mind Electronics Appliance Company Limited, Baoding, Hebei 071000 (CN)
(72) Inventor: LIU, Qiang, Baoding, Hebei 071000 (CN); JIN, Hui, Baoding, Hebei 071000 (CN); LIU, Yingjie, Baoding, Hebei 071000 (CN); XUE, Chun, Baoding, Hebei 071000 (CN); ZHENG, Xueliang, Baoding, Hebei 071000 (CN)
(74) Representative: Murgitroyd & Company
(86) International application number: PCT/CN2024/129907
(87) International publication number: WO 2025/098323

(57) **Abstract**

Disclosed is a vehicle lamp, including a vehicle lamp body and a high-low beam module located at a center of the vehicle lamp body. A plurality of reflector bowls are provided in a circumferential direction around the high-low beam module, and the plurality of reflector bowls include a low-beam widening reflector bowl, a high-beam boosting and widening reflector bowl, a low-beam boosting reflector bowl, and a cutoff-line brightness enhancing reflector bowl. An ambient light claw is provided between adjacent reflector bowls, and a light guide is fixedly mounted on a surface, facing away from the high-low beam module, of the ambient light claw. A plurality of reflector bowl lamp boards are provided in a circumferential direction around the high-low beam module, and a surface, closer to a reflector bowl, of each reflector bowl lamp board is provided with LED lamps of different colors, and each of the plurality of reflector bowls is correspondingly provided with a reflector bowl lamp board. The reflector bowl is driven to open and close by a mechanical drive structure. The reflector bowl is driven to open and close by a mechanical drive structure. The vehicle lamp of the present invention has a simple lamp structure, diverse modes, requires fewer LED lamp beads, thereby reducing costs. The present invention further provides a lighting control method for a vehicle lamp.

## Description

### CROSS-REFERENCE TO RELATED APPLICATIONS

This application claims priority to Chinese Patent Application filed with the China Patent Office on November 8, 2023, with application number 202311480394.0 and titled "VEHICLE LAMP AND LIGHTING CONTROL METHOD THEREFOR", the entire contents of which are incorporated herein by reference.

### TECHNICAL FIELD

The present invention relates to the field of vehicle lamp technology, and in particular, to a vehicle lamp and a lighting control method therefor.

### BACKGROUND

With the advancement of automotive lighting technology, a vehicle lamp with dynamic lighting effects has become increasingly popular among end-users.

Currently, dynamic lighting effects in the market are primarily achieved through two approaches: either by sequentially activating array-arranged light emitting diode (LED) lamp beads, or by employing mechanical movement of a decorative bezel to block or expose luminous structures. For vehicle lamps that utilize array-arranged LED lamp beads to create dynamic effects, a large quantity of LED lamp beads are required, leading to higher manufacturing and design costs. For vehicle lamps relying on the mechanical movement of the decorative bezel to block or expose the luminous structures, the dynamic effect is solely dependent on varying patterns of obscuration provided by the bezel, which leads to a rigid and lackluster lighting presentation, and offers limited functionality.

### SUMMARY

In view of this, the present invention provides a vehicle lamp with a simple structure, diverse modes, requiring fewer LED lamp beads, thereby reducing costs.

The present invention further provides a lighting control method for a vehicle lamp.

To achieve the above objectives, the present invention provides the following technical solutions.

A vehicle lamp, includes a vehicle lamp body and a high-low beam module located at a center of the vehicle lamp body, where a plurality of reflector bowls are provided in a circumferential direction around the high-low beam module, the plurality of reflector bowls include a low-beam widening reflector bowl, a high-beam boosting and widening reflector bowl, a low-beam boosting reflector bowl, and a cutoff-line brightness enhancing reflector bowl, an ambient light claw is provided between adjacent reflector bowls, and a light guide is fixedly mounted on a surface, facing away from the high-low beam module, of the ambient light claw;
a plurality of reflector bowl lamp boards are provided in the circumferential direction around the high-low beam module, and a surface, closer to a reflector bowl, of each reflector bowl lamp board is provided with LED lamps of different colors, and each of the plurality of reflector bowls is correspondingly provided with a reflector bowl lamp board; and
the reflector bowl is driven to open and close by a mechanical drive structure.

Optionally, the mechanical drive structure includes:
a large gear ring, where an inner surface of the large gear ring is provided with a first meshing tooth;
a drive gear shaft, provided with a second meshing tooth meshing with the first meshing tooth;
a motor, configured to drive the drive gear shaft to rotate; and
a connecting rod structure, where a power output end of the drive gear shaft is connected to the reflector bowl through the connecting rod structure.

Optionally, the drive gear shaft is further provided with a third meshing tooth meshing with a driving rack and the driving rack is rotatably connected to the connecting rod structure.

Optionally, the connecting rod structure includes a first connecting rod, a second connecting rod, and a third connecting rod, where one end of the first connecting rod is hinged to the driving rack, and the other end of the first connecting rod is hinged to a rod body of the second connecting rod;
one end of the second connecting rod is hinged to one end of the third connecting rod, and the other end of the second connecting rod is hinged to a top end of the reflector bowl; and
one end, farther away from the second connecting rod, of the third connecting rod is hinged to a fixed support, and a base of the reflector bowl is slidably connected to a fixed sliding slot.

Optionally, the drive gear shaft includes a driven gear shaft and a driving gear shaft, and the driving gear shaft is further provided with a fourth meshing tooth connected to the motor through a transmission gear set.

Optionally, an outer side of the large gear ring is provided with a fifth meshing tooth meshing with a middle gear, and the middle gear is fixedly connected to an output shaft of the motor and is coaxial with the output shaft of the motor.

Optionally, the drive gear shaft, configured to drive the low-beam widening reflector bowl or the low-beam boosting reflector bowl, meshes with a manual adjustment structure;
the manual adjustment structure includes a sector gear and a worm gear set, the sector gear is slidably connected to a limited slide slot in a circumferential direction on an end face of the large gear ring, a side, closer to an axis of the large gear ring, of the sector gear is provided with the first meshing tooth, and a side, farther away from the axis of the large gear ring, of the sector gear is provided with a sixth meshing tooth meshing with the worm gear set.

Optionally, the worm gear set is rotatably connected to a support block on the end face of the large gear ring, and a height of a side, provided with the sixth meshing tooth, of the sector gear is greater than a height of the end face of the large gear ring; and
a length of the limited slide slot along the circumference direction of the large gear ring is greater than a length of the sector gear along the circumference direction of the large gear ring.

Optionally, the LED lamps include a first LED lamp bead and a second LED lamp bead arranged side by side, the first LED lamp bead is a cool white LED, and the second LED lamp bead is a warm-white LED, with a color temperature of 4500k-5000k.

Optionally, two low-beam widening reflector bowl are provided and arranged symmetrically about a center position of the high-low beam module; four high beam boosting and widening reflector bowls are provided and the four high beam boosting and widening reflector bowls are symmetrical about the center position of the high-low beam module; the low-beam boosting reflector bowl and the cutoff-line brightness enhancing reflector bowl are provided symmetrically about the center position of the high-low beam module;
the eight reflector bowls are uniformly distributed around the high-low beam module in the circumferential direction; and
the ambient light claw is fixedly disposed between each adjacent reflector bowls.

From the above technical solution, it can be seen that the reflector bowls of the vehicle lamp in the present invention include a low-beam widening reflector bowl, a high-beam boosting and widening reflector bowl, a low-beam boosting reflector bowl, and a cutoff-line brightness enhancing reflector bowl. Each reflector bowl corresponds to a reflector bowl lamp board, and each reflector bowl lamp board is equipped with LED lamps of different colors on a surface, closer to the reflector bowl, of the reflector bowl lamp board. By turning on the LED lamps corresponding to the reflector bowls with different functions, different functional requirements can be achieved. An ambient light claw is provided between adjacent reflector bowls 3, and a light guide is fixedly disposed on a surface, facing away from the high-low beam module, of the ambient light claw, which lights up and emits light. Different colored LED lamps are installed on the reflector bowl lamp board to achieve different lighting modes. According to the vehicle lamp of the present invention, reflector bowls with different functions are provided. When there is a functional requirement, LED lamps of a reflector bowl with a corresponding function may be turned on, and the LED lamps are controlled by the controller to select and light up a corresponding colored bead according to a mode, so as to achieve different functions. Thus, the vehicle lighting lamp disclosed herein achieves a high level of integration, combining the functions of high-low beam, auxiliary high-low beam, ambient lighting, and position lamps.

The present invention further provides a lighting control method for a vehicle lamp, configured to control the above-mentioned vehicle lamp, and including: controlling, based on a lighting mode, opening and closing of the reflector bowl, a lighting state of the reflector bowl, on and off modes of the high-low beam module, a lighting mode of the high-low beam module and lighting on and off of the ambient light claw.

Optionally, the lighting mode includes:
a basic low-beam mode, closing the reflector bowl and controlling low beam of the high-low beam module to light up;
a basic high-beam mode, closing the reflector bowl and controlling high beam of the high-low beam module to light up;
a low-beam boosting mode, opening the reflector bowl and controlling the low beam of the high-low beam module to light up, to light up the low-beam boosting reflector bowl;
a low-beam widening mode, opening the reflector bowl and controlling the low beam of the high-low beam module to light up, to light up the low-beam widening reflector bowl;
a high-beam boosting and widening mode, opening the reflector bowl and controlling the high beam of the high-low beam module to light up, to light up the high beam boosting and widening reflector bowl;
a cutoff-line brightness and sharpness enhancing mode, opening the reflector bowl and controlling the low beam of the high-low beam module to light up, to light up the cutoff-line brightness enhancing reflector bowl;
a low-beam dusk mode, opening the reflector bowl and controlling the low beam of the high-low beam module to light up, to light up the low-beam boosting reflector bowl, the low-beam widening reflector bowl, and the cutoff-line brightness enhancing reflector bowl;
a high-beam dusk mode, opening the reflector bowl and controlling the high beam of the high-low beam module to light up, to light up the high-beam boosting and widening reflector bowl;
a welcome mode, controlling the ambient light claw to dynamically light up in a spiral pattern or light up gradually around the high-low beam module, while opening the reflector bowl to light up the reflector bowl in the spiral pattern or gradually; and
a farewell mode, controlling the ambient light claw to dynamically light off in the spiral pattern or light off gradually around the high-low beam module, while closing the reflector bowl to light off the reflector bowl in the spiral pattern or gradually.

The lighting control method of the vehicle lamp of the present invention is applied to control the above-mentioned vehicle lamp, and therefore has the advantages of the above-mentioned vehicle lamp, which will not be repeated herein.

### BRIEF DESCRIPTION OF THE DRAWINGS

In order to provide a clearer explanation of embodiments of the present invention or technical solutions in the prior art, a brief introduction will be given to the accompanying drawings required for the description of the embodiments or the prior art. It is obvious that the accompanying drawings described below are only some embodiments of the present invention. For those skilled in the art, other drawings can be obtained based on these accompanying drawings without creative work.
FIG. 1 is a schematic structural diagram of an open state of a reflector bowl of a vehicle lamp provided by an embodiment of the present invention.
FIG. 2 is a schematic structural diagram of a closed state of a reflector bowl of a vehicle lamp provided by an embodiment of the present invention.
FIG. 3 is a schematic structural diagram of an arrangement of an ambient light claw provided by an embodiment of the present invention.
FIG. 4 is a schematic structural diagram of a vehicle lamp provided by an embodiment of the present invention.
FIG. 5 is a schematic structural diagram of a reflector bowl lamp board provided by an embodiment of the present invention.
FIG. 6 is a schematic structural diagram of a mechanical drive structure of a reflector bowl provided by an embodiment of the present invention.
FIG. 7 is a schematic structural diagram of a mechanical drive structure of a reflector bowl provided by another embodiment of the present invention.
FIG. 8 is a schematic structural diagram of a mechanical drive structure of a reflector bowl provided by still another embodiment of the present invention.
FIG. 9 is a schematic diagram of connection between a connecting rod structure and a reflector bowl provided by an embodiment of the present invention.
FIG. 10 is a schematic diagram of a position of a connecting rod structure in a closed state of a reflector bowl provided by an embodiment of the present invention.
FIG. 11 is a schematic diagram of a reflector bowl stopping at a certain position between a closed state and an open state provided by an embodiment of the present invention.
FIG. 12 is a schematic diagram of a position of a connecting rod structure in a closed state of a reflector bowl provided by an embodiment of the present invention.
FIG. 13 is a schematic diagram of a vehicle lamp when turned on in a low-beam boosting mode provided by an embodiment of the present invention.
FIG. 14 is a schematic diagram of a vehicle lamp when turned on in a low-beam widening mode provided by an embodiment of the present invention.
FIG. 15 is a schematic diagram of a vehicle lamp when turned on in a high-beam boosting and widening mode provided by an embodiment of the present invention.
FIG. 16 is a schematic diagram of a vehicle lamp when turned on in a cutoff-line brightness and sharpness enhancing mode provided by an embodiment of the present invention.
FIG. 17 is a schematic diagram of a vehicle lamp when turned on in a low-beam dusk mode provided by an embodiment of the present invention.

### Numeral reference:

1. vehicle lamp body; 2. ambient light claw; 3. reflector bowl; 301. low-beam widening reflector bowl; 302. high-beam boosting and widening reflector bowl; 303. low-beam boosting reflector bowl; 304. cutoff-line brightness enhancing reflector; 4. reflector bowl lamp board; 401. first LED lamp bead; 402; second LED lamp bead; 5. reflector bowl decorative panel; 6. high-low beam module; 7. large gear ring; 8. sector gear; 9. first meshing tooth; 10. sixth meshing tooth; 11. support block; 12. limited slide slot; 13. drive gear shaft; 1301. second meshing tooth; 1302. third meshing tooth; 1303. fourth meshing tooth; 14. driving rack; 15. transmission gear set; 1501. small gear; 1502. large gear; 16. powered rack; 17. push-pull motor; 18. rotary motor; 19. middle gear; 20. fifth meshing tooth; 21. worm gear set; 22. first connecting rod; 23. second connecting rod; 24. third connecting rod; 25. fixed sliding slot; 26. module holder.

### DETAILED DESCRIPTION OF THE EMBODIMENTS

The present invention discloses a vehicle lamp with a simple structure, diverse modes and fewer LED lamp beads, thereby reducing costs.

The present invention further discloses a lighting control method for a vehicle lamp.

In the following, technical solutions in embodiments of the present invention will be clearly and completely described with reference to accompanying drawings. Obviously, the described embodiments are only part of the embodiments of the present invention, not all of them. Based on the embodiments of the present invention, all other embodiments obtained by those skilled in the art without creative work shall fall within the scope of protection of the present invention.

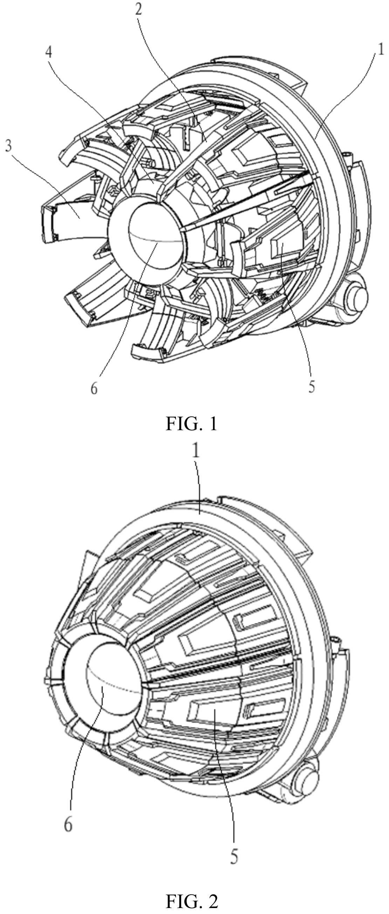

Referring to FIGS. 1 to 12, the vehicle lamp of the present invention includes a vehicle lamp body 1 and a high-low beam module 6 located at the center of the vehicle lamp body 1. A plurality of reflector bowls 3 are arranged circumferentially around the high-low beam module 6. The plurality of reflector bowls 3 includes a low-beam widening reflector bowl 301, a high-beam boosting and widening reflector bowl 302, a low-beam boosting reflector bowl 303, and a cutoff-line brightness enhancing reflector bowl 304. An ambient light claw 2 is provided between adjacent reflector bowls 3, and a light guide is fixedly arranged on a surface, facing away from the high-low beam module 6, of the ambient light claw 2. A plurality of reflector bowl lamp boards 4 are arranged circumferentially around the high-low beam module 6, and each reflector bowl lamp board 4 is equipped with an LED lamp of a different color on a surface, closer to the reflector bowl 3, of the reflector bowl lamp board 4. The reflector bowl 3 and the reflector bowl lamp board 4 are arranged in one-to-one correspondence. The reflector bowl 3 is driven to open and close by a mechanical drive structure.

Therein, the vehicle lamp body 1 and the high-low beam module 6 are structures of a vehicle lamp in the prior art, which will not be repeated herein again. The ambient light claw 2 may light up either as an ambient lamp or as a position lamp. When a vehicle is in motion, the ambient light claw 2 may light up to serve as the position lamp. The low-beam widening reflector bowl 301, the high-beam boosting and widening reflector bowl 302, the low-beam boosting reflector bowl 303, and the cutoff-line brightness enhancing reflector bowl 304 are reflector bowls with different functions in the prior art. Different reflector bowls are provided with different reflective surfaces and patterns. The LED lamps are electrically connected to a controller, so that the controller may control on/off of the LED lamps. A specific control method is set according to configuration of modes, and the implementation of this control method may be achieved through program edition by those skilled in the art.

The reflector bowls 3 of the vehicle lamp in the present invention include a low-beam widening reflector bowl 301, a high-beam boosting and widening reflector bowl 302, a low-beam boosting reflector bowl 303, and a cutoff-line brightness enhancing reflector bowl 304. Each reflector bowl 3 corresponds to a reflector bowl lamp board 4, and each reflector bowl lamp board 4 is equipped with an LED lamp of a different color on a surface, closer to the reflector bowl 3, of the reflector bowl lamp board 4. By turning on the LED lamps corresponding to the reflector bowls 3 with different functions, different functional requirements can be achieved. An ambient light claw 2 is provided between adjacent reflector bowls 3, and a light guide is fixedly disposed on a surface, facing away from the high-low beam module 6, of the ambient light claw 2. The light guide may light up to emit light. Different colored LED lamps are provided on the reflector bowl lamp board 4 to achieve different lighting modes. According to the vehicle lamp of the present invention, reflector bowls with different functions are provided. When there is a functional requirement, an LED lamp of a reflector bowl with a corresponding function may be turned on, and the LED lamp is controlled by the controller to select and light up a corresponding colored bead according to a mode, so as to achieve different functions. Thus, the vehicle lighting lamp disclosed by the present invention achieves a high level of integration, combining the functions of high-low beam, auxiliary high-low beam, ambient lighting, and position lighting. Meanwhile, according to the vehicle lamp of the present invention, welcome and farewell functions may be achieved by dynamically turning on and off the LED lamps. By selecting different colored beads to light up, a dusk lighting function may also be achieved. The vehicle lamp of the present invention has a simple lamp structure, diverse modes, requires fewer LED lamp beads, thereby reducing costs.

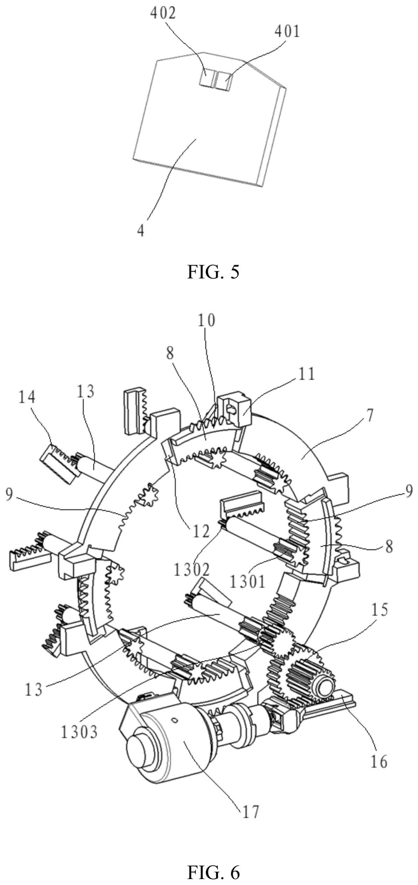

In an embodiment, the LED lamp includes a first LED lamp bead 401 and a second LED lamp bead 402 arranged side by side. As shown in FIG. 5, the first LED lamp bead 401 and the second LED lamp bead 402 are fixedly connected to a surface, closer to the reflector bowl 3, of the reflector bowl lamp board 4. The first LED lamp bead 401 is a cool white LED, and the second LED lamp bead 402 is a warm-white LED with a color temperature of 4500k-5000k.

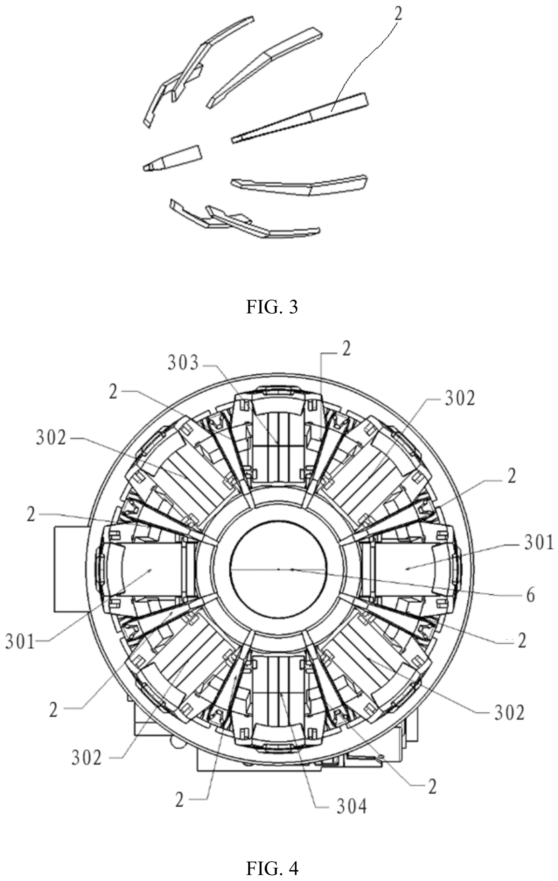

Therein, two low-beam widening reflector bowls 301 are provided and arranged symmetrically about a center position of the high-low beam module 6, as shown in FIG. 4. In order to ensure an illumination effect of the high beam, four high-beam boosting and widening reflector bowls 302 are provided. The four high-beam boosting and widening reflector bowls 302 are symmetrical about the center position of the high-low beam module 6, that is, an angle between adjacent two high-beam boosting and widening reflector bowls 302 is 90 degrees. A low-beam boosting reflector bowl 303 and a cutoff-line brightness enhancing reflector bowl 304 are provided symmetrically about the center position of the high-low beam module 6. The above-mentioned eight reflector bowls 3 are uniformly distributed around the circumference of the high-low beam module 6, that is, an angle between adjacent two reflector bowls 3 is 45 degrees. In order to improve a uniform lighting effect of the ambient lamp, a fixed ambient light claw 2 is provided between each two adjacent reflector bowls 3.

Specifically, the mechanical drive structure includes a large gear ring 7, a drive gear shaft 13, a motor, and a connecting rod structure. An inner surface of the large gear ring 7 is provided with a first meshing tooth 9, and the drive gear shaft 13 is provided with a second meshing tooth 1301 for meshing with the first meshing tooth 9. The motor is configured to provide power for rotation of the drive gear shaft 13. A power output end of the drive gear shaft 13 is connected to the reflector bowl 3 through the connecting rod structure. The connecting rod structure is configured to pull the reflector bowl 3 to control the opening and closing of the reflector bowl 3.

Furthermore, in order to facilitate the driving of the connecting rod structure, the power output end of the drive gear shaft 13 is provided with a third meshing tooth 1302 to mesh with a driving rack 14. The driving rack 14 is rotatably connected to the connecting rod structure. The third meshing tooth 1302 and the second meshing tooth 1301 are spaced apart along an axial direction of the drive gear shaft 13.

In an embodiment, in order to facilitate one motor to simultaneously drive all drive gear shafts 13 to rotate, the drive gear shaft 13 includes a driven gear shaft and a driving gear shaft. The driving gear shaft is further provided with a fourth meshing tooth 1303 connected to the motor through a transmission gear set 15, as shown in FIG. 6. The transmission gear set 15 includes a small gear 1501 and a large gear 1502 arranged coaxially. The small gear 1501 meshes with a powered rack 16, which is fixedly connected to a power output shaft of the motor. In this embodiment, the motor is a push-pull motor 17. The large gear 1502 meshes with the fourth meshing tooth 1303. It can be understood that there is one driving gear shaft and multiple driven gear shafts, and each drive gear shaft 13 corresponds to a reflector bowl 3 to drive it open and close. When the push-pull motor 17 works, the powered rack 16 drives the small gear 1501 to rotate. The large gear 1502 rotates under the drive of the small gear 1501, thereby driving the driving gear shaft that meshes with the large gear 1502 to rotate. The driving gear shaft drives the large gear ring 7 to rotate through the first meshing tooth 9 that meshes with it, and the large gear ring 7 drives the driven gear shaft to rotate through the first meshing tooth 9 that meshes with the driven gear shaft, achieving a power transmission structure with one input and multiple output. It can be understood that the large gear ring 7, the drive gear shaft 13, and the transmission gear set 15 are all rotatably mounted on the main lamp body. This rotation connecting structure constitutes a conventional rotational support mechanism commonly used in the prior art, which will not be repeated herein again. Based on the above structure, it can be seen that the driven gear shaft is provided with only the third meshing tooth 1302 and the second meshing tooth 1301, while the driving gear shaft is provided with the third meshing tooth 1302, the second meshing tooth 1301, and the fourth meshing tooth 1303. The third meshing teeth 1302 and fourth meshing teeth 1303 are disposed on both sides of the second meshing teeth 1301.

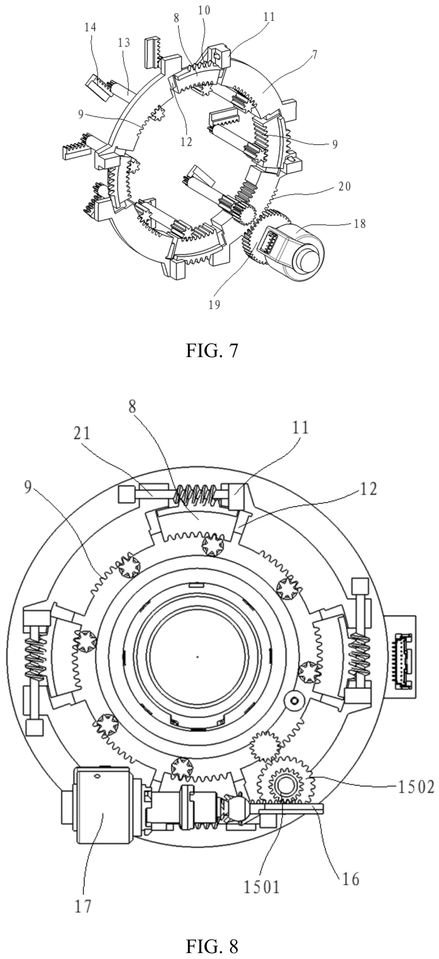

In another embodiment, an outer side of the large gear ring 7 is provided with a fifth meshing tooth 20 meshing with a middle gear 19, as shown in FIG. 7. The middle gear 19 is fixed coaxially with the output shaft of the motor. In this embodiment, the motor is a rotary motor 18. In this embodiment, there is no need to provided a driving gear shaft, and only the driven gear shaft needs to be set. Other structures may be referred to in the above-mentioned embodiments. When the rotary motor works, the middle gear 19 is driven to rotate. The middle gear 19 in turn drives the large gear ring 7 meshing with the middle gear 19 to rotate. The rotation of the large gear ring 7 drives the drive gear shaft 13 meshing with the large gear ring 7 to rotate, and the drive gear shaft 13 drives the reflector bowl 3 to open and close through the connecting rod structure.

According to the vehicle lamp of the present invention, opening and closing of the reflector bowl 3 is driven by a mechanical structure. Due to manufacturing errors, product assembly errors, and gaps in mechanical transmission of the mechanical structure, there may be errors in an angle of the reflector bowl 3, resulting in differences in ideal positions of light patterns emitted by the reflector bowls 3. Especially for a low-beam reflector bowl that requires a higher precision on an angle and a position of the reflector bowl 3, the impact is greater. Therefore, a manual adjustment structure is provided to perform a fine adjustment to an opening angle of the low-beam reflector bowl. The manual adjustment structure is meshed with the drive gear shaft 13. The low-beam reflector bowls in the present invention include a low-beam boosting reflector bowl 303, a cutoff-line brightness enhancing reflector bowl 304, and a low-beam widening reflector bowl 301. Specifically, the manual adjustment structure includes a sector gear 8 and a worm gear set 21. A limited slide slot 12 is provided on an end face of the large gear ring 7. A position of the limited slide slot 12 corresponds to the drive gear shaft 13 that drives the low-beam reflector bowl. The sector gear 8 is slidably connected to the limited slide slot 12 of the large gear ring 7 in a circumferential direction. The first meshing tooth 9 is provided on a side, closer to the axis of the large gear ring 7, of the sector gear 8 for meshing with the drive gear shaft 13. A sixth meshing tooth 10 is provided on a side, farther away from the axis of the large gear ring 7, of the sector gear 8. The sixth meshing tooth 10 is meshed with the worm gear set 21, as shown in FIG. 8. Therein, a surface, provided with the first meshing tooth 9, of the sector gear 8 is arranged parallel to an inner surface of the large gear ring 7, that is, the surface, provided with the first meshing tooth 9, of the sector gear 8 is an arc-shaped surface. A surface, provided with the sixth meshing tooth 10, of the sector gear 8 is arranged parallel to the end face of the large gear ring 7, as shown in FIGS. 6 and 7.

Furthermore, the worm gear set 21 is rotatably connected to a support block 11 provided on the end face of the large gear ring 7. In order to facilitate meshing with the worm gear set 21, a height of one side, provided with the sixth meshing tooth 10, of the sector gear 8 is higher than a height of the end face of the large gear ring 7. A length of the limited slide slot 12 along the circumference of the large gear ring 7 is greater than a length of the sector gear 8 along the circumference of the large gear ring 7. The length difference between the two is a reserved sliding space for the sector gear 8 during manual fine-tuning.

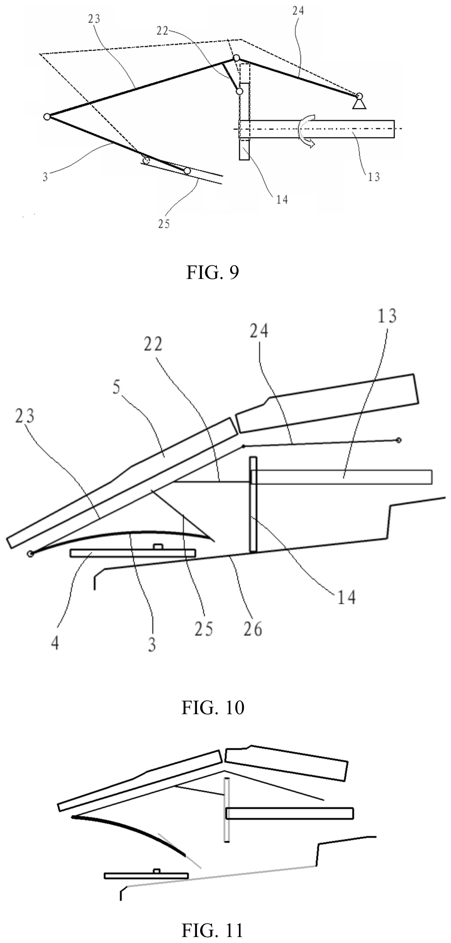

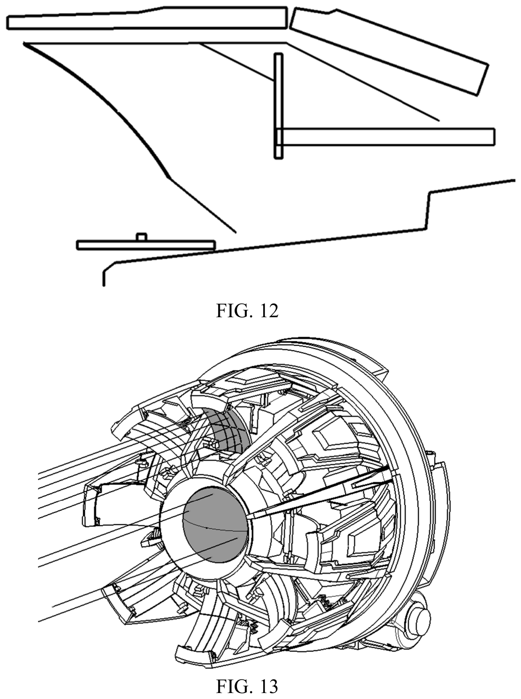

In order to facilitate the opening and closing of the reflector bowl 3, the connecting rod structure includes a first connecting rod 22, a second connecting rod 23, and a third connecting rod 24. One end of the first connecting rod 22 is hinged to the driving rack 14, and the other end of the first connecting rod 22 is hinged to a rod body of the second connecting rod 23. One end of the second connecting rod 23 is hinged to one end of the third connecting rod 24, and the other end of the second connecting rod 23 is hinged to a top end of the reflector bowl 3. An end, farther away from the second connecting rod 23, of the third connecting rod 24 is hinged to a fixed support, as shown in FIGS. 9 to 12. A root of the reflector bowl 3 is slidably connected within a fixed slide slot 25. The fixed slide slot 25 and the fixed support are fixedly installed on the vehicle lamp body 1. The driving rack 14 is slidably mounted on the vehicle lamp body 1. A solid line in FIG. 9 represents a connection position relationship between the connecting rod structure and the reflector bowl in a state, and a dashed line represents a connection position relationship between the connecting rod structure and the reflector bowl 3 in another state. FIG. 10 shows a position diagram of a connecting rod structure when a reflector bowl 3 is in a closed state. FIG. 11 shows a position diagram of a connecting rod structure when a reflector bowl 3 stops at a certain position between a closed state and an open state. FIG. 12 shows a position diagram of a connecting rod structure when a reflector bowl 3 is in a closed state. It can be understood that the connecting rod structure is set in a cavity between a reflection bowl decorative panel 5 and a module holder 26.

A lighting control method of the vehicle lamp provided by the present invention is provide to control the above-mentioned vehicle lamp. According to a lighting mode, opening and closing of the reflector bowl and a lighting state of the reflector bowl are controlled, as well as turning on and off of the high-low beam module and a lighting state of the ambient light claw.

When in a basic low beam mode, the reflector bowl 3 is in a closed state, and the controller is configured to control the low beam of the high-low beam module 6 to light up. When in a basic high beam mode, the reflector bowl 3 is in the closed state, and the controller is configured to control the high beam of the high-low beam module 6 to light up.

When in a low-beam boosting mode, the reflector bowl 3 is in an open state, and the controller is configured to control the low beam of the high-low beam module 6 to light up. Meanwhile, the LED lamp on a reflector bowl lamp board 4 corresponding to the low-beam boosting reflector bowl 303 is turned on, lighting up the low-beam boosting reflector bowl 303, as shown in FIG. 13.

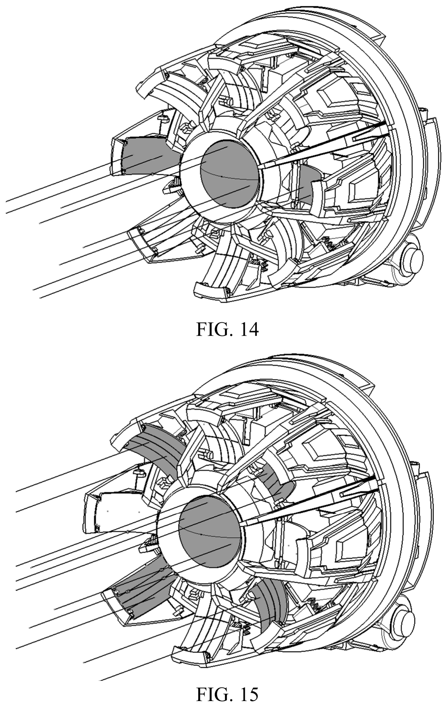

When in a low-beam widening mode, the reflector bowl 3 is in the open state, and the controller is configured to control the low beam of the high-low beam module 6 to light up. Meanwhile, the LED lamp on a reflector bowl lamp board 4 corresponding to the low-beam widening reflector bowl 301 is turned on, lighting up the low-beam widening reflector bowl 301, as shown in FIG. 14.

When in a high-beam boosting and widening mode, the reflector bowl 3 is in the open state, and the controller is configured to control the high beam of the high-low beam module 6 to light up. Meanwhile, the LED lamp on a reflector bowl lamp board 4 corresponding to the high-beam boosting and widening reflector bowl 302 is turned on, lighting up the high-beam boosting and widening reflector bowl 302, as shown in FIG. 15.

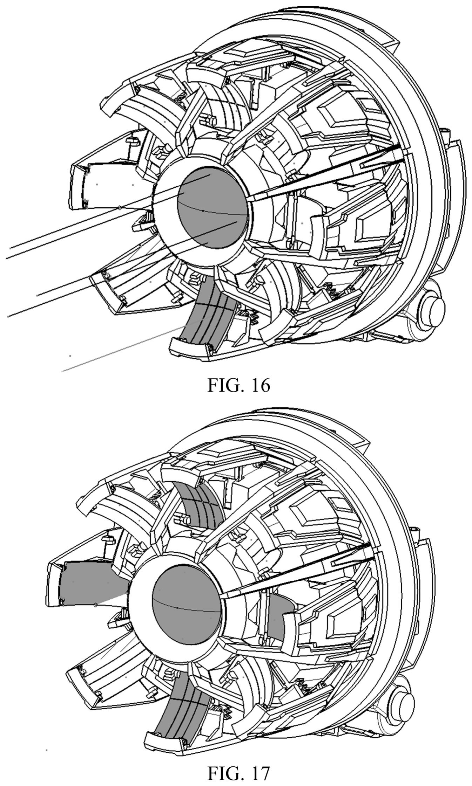

When in a cutoff-line brightness and sharpness enhancing mode, the reflector bowl 3 is in the open state, and the controller is configured to control the low beam of the high-low beam module 6 to light up. Meanwhile, the LED lamp on a reflector bowl lamp board 4 corresponding to the cutoff-line brightness enhancing reflector bowl 304 is turned on, lighting up the cutoff-line brightness enhancing reflector bowl 304, as shown in FIG. 16.

In the low-beam boosting mode, the low-beam widening mode, the high-beam boosting and widening mode, and the cutoff-line brightness and sharpness enhancing mode mentioned above, the LED lamp to be turned on is a first LED lamp bead 401, which is a cool white LED.

A dusk mode includes a low-beam dusk mode and high-beam dusk mode. When the low-beam dusk mode is turned on, the reflector bowl 3 is in the open state, and the controller is configured to control the low beam of the high-low beam module 6 to light up. The LED lamp on the reflector bowl lamp board 4 corresponding to the low-beam boosting reflector bowl 303 is turned on, lighting up the low-beam boosting reflector bowl 303. Meanwhile, the LED lamp on the reflector bowl lamp board 4 corresponding to the low-beam widening reflector bowl 301 is turned on, lighting up the low-beam widening reflector bowl 301. Meanwhile, the LED lamp on the reflector bowl lamp board 4 corresponding to the cutoff-line brightness enhancing reflector bowl 304 is turned on, lighting up the cutoff-line brightness enhancing reflector bowl 304, as shown in FIG. 17. In this mode, the LED lamp to be turned on is a second LED lamp bead 402, which is a warm-white LED.

When the high-beam dusk mode is turned on, the reflector bowl 3 is in the open state, and the controller is configured to control the high beam of the high-low beam module 6 to light up. Meanwhile, the LED lamp on the reflector bowl lamp board 4 corresponding to the high-beam boosting and widening reflector bowl 302 is turned on, lighting up the high-beam boosting and widening reflector bowl 302. In this mode, the LED lamp to be turned on is the second LED lamp bead 402, which is the warm-white LED.

When a welcome mode is turned on, the ambient light claw 2 is configured to dynamically light up in a spiral pattern or gradually light up around the high-low beam module 6, and the reflector bowl 3 is controlled to open to be lit up in a spiral pattern or gradually. When a farewell mode is turned on, the ambient light claw 2 is configured to dynamically light off in a spiral pattern or gradually light off around the high-low beam module 6, and the reflector bowl 3 is controlled to close to light off in the spiral pattern or gradually. When in the welcome mode or the farewell mode, the high-low beam module 6 is configured to be off, and the lamp bead to be lit up may be the first LED lamp bead 401 or the second LED lamp bead 402, which will not be limited herein.

The control of each mode in the lighting control method for the vehicle lamp is based on a control program of a corresponding model pre-stored in the controller, and specific program changes can be made as needed.

According to the vehicle lamp of the present invention, functions of high/low beam, auxiliary high/low beam, ambient lighting, and position lamps are integrated. Concurrently, the welcome and farewell functions may be realized through dynamic on and off of LED, as well as the dusk lighting function by turning on the warm-white LED. This results in a diverse presentation of functional lighting modes. The vehicle lamp of the present invention combines mechanical motion with optical functions to form multiple lighting and illumination modes, achieving a circular mechanical dynamic lighting effect. By perform a fine adjustment to the opening angle of the low-beam reflector bowl through the manual adjustment structure, the low-beam reflector bowl may be controlled to reach an ideal angle position.

In the description of this scheme, it should be understood that terms "up", "down", "vertical", "inside", "outside", etc. indicate orientation or position relationships based on the orientation or position relationships shown in the accompanying drawings, only for the convenience of describing the present invention and simplifying the description, and do not indicate or imply that the device or component referred to must have a specific orientation, be constructed and operated in a specific orientation, and therefore cannot be understood as a limitation of this scheme.

In addition, terms "first" and "second" are only used for descriptive purposes and cannot be understood as indicating or implying relative importance or implying the number of technical features indicated. Thus, the features limited to "first" and "second" may explicitly or implicitly include one or more of these features. In the description of this scheme, the meaning of "multiple" refers to two or more, unless otherwise specified.

The various embodiments in the specification are described in a progressive manner, with each embodiment emphasizing its differences from other embodiments. The same and similar parts between the embodiments can be referred to each other.

The above description of the disclosed embodiments enables those skilled in the art to implement or use the present invention. Various modifications to these embodiments will be apparent to those skilled in the art, and the general principles defined herein can be implemented in other embodiments without departing from the spirit or scope of the present invention. Therefore, the present invention will not be limited to the embodiments shown herein, but will be within the widest scope consistent with the principles and novel features disclosed herein.

## Claims

1. A vehicle lamp, comprising a vehicle lamp body and a high-low beam module located at a center of the vehicle lamp body, wherein a plurality of reflector bowls are provided in a circumferential direction around the high-low beam module, the plurality of reflector bowls comprise a low-beam widening reflector bowl, a high-beam boosting and widening reflector bowl, a low-beam boosting reflector bowl, and a cutoff-line brightness enhancing reflector bowl, an ambient light claw is provided between adjacent reflector bowls, and a light guide is fixedly mounted on a surface, facing away from the high-low beam module, of the ambient light claw;
a plurality of reflector bowl lamp boards are provided in the circumferential direction around the high-low beam module, and a surface, closer to a reflector bowl, of each reflector bowl lamp board is provided with LED lamps of different colors, and each of the plurality of reflector bowls is correspondingly provided with a reflector bowl lamp board; and
the reflector bowl is driven to open and close by a mechanical drive structure.

2. The vehicle lamp according to claim 1, wherein the mechanical drive structure comprises:
a large gear ring, wherein an inner surface of the large gear ring is provided with a first meshing tooth;
a drive gear shaft, provided with a second meshing tooth meshing with the first meshing tooth;
a motor, configured to drive the drive gear shaft to rotate; and
a connecting rod structure, wherein a power output end of the drive gear shaft is connected to the reflector bowl through the connecting rod structure.

3. The vehicle lamp according to claim 2, wherein the drive gear shaft is further provided with a third meshing tooth meshing with a driving rack and the driving rack is rotatably connected to the connecting rod structure.

4. The vehicle lamp according to claim 3, wherein the connecting rod structure comprises a first connecting rod, a second connecting rod, and a third connecting rod, wherein one end of the first connecting rod is hinged to the driving rack, and the other end of the first connecting rod is hinged to a rod body of the second connecting rod;
one end of the second connecting rod is hinged to one end of the third connecting rod, and the other end of the second connecting rod is hinged to a top end of the reflector bowl; and
one end, farther away from the second connecting rod, of the third connecting rod is hinged to a fixed support, and a base of the reflector bowl is slidably connected to a fixed sliding slot.

5. The vehicle lamp according to claim 3, wherein the drive gear shaft comprises a driven gear shaft and a driving gear shaft, and the driving gear shaft is further provided with a fourth meshing tooth connected to the motor through a transmission gear set.

6. The vehicle lamp according to claim 2 or 3, wherein an outer side of the large gear ring is provided with a fifth meshing tooth meshing with a middle gear, and the middle gear is fixedly connected to an output shaft of the motor and is coaxial with the output shaft of the motor.

7. The vehicle lamp according to claim 2, wherein the drive gear shaft, configured to drive the low-beam widening reflector bowl or the low-beam boosting reflector bowl, meshes with a manual adjustment structure;
the manual adjustment structure comprises a sector gear and a worm gear set, the sector gear is slidably connected to a limited slide slot in a circumferential direction on an end face of the large gear ring, a side, closer to an axis of the large gear ring, of the sector gear is provided with the first meshing tooth, and a side, farther away from the axis of the large gear ring, of the sector gear is provided with a sixth meshing tooth meshing with the worm gear set.

8. The vehicle lamp according to claim 7, wherein the worm gear set is rotatably connected to a support block on the end face of the large gear ring, and a height of a side, provided with the sixth meshing tooth, of the sector gear is greater than a height of the end face of the large gear ring; and
a length of the limited slide slot along the circumference direction of the large gear ring is greater than a length of the sector gear along the circumference direction of the large gear ring.

9. The vehicle lamp according to claim 1, wherein the LED lamps comprise a first LED lamp bead and a second LED lamp bead arranged side by side, the first LED lamp bead is a cool white LED, and the second LED lamp bead is a warm-white LED, with a color temperature of 4500k-5000k.

10. The vehicle lamp according to claim 1, wherein two low-beam widening reflector bowl are provided and arranged symmetrically about a center position of the high-low beam module; four high beam boosting and widening reflector bowls are provided and the four high beam boosting and widening reflector bowls are symmetrical about the center position of the high-low beam module; the low-beam boosting reflector bowl and the cutoff-line brightness enhancing reflector bowl are provided symmetrically about the center position of the high-low beam module;
the eight reflector bowls are uniformly distributed around the high-low beam module in the circumferential direction; and
the ambient light claw is fixedly disposed between each adjacent reflector bowls.

11. A control method for a vehicle lamp, configured to control the vehicle lamp according to any one of claims 1-10, and comprising: controlling, based on a lighting mode, opening and closing of the reflector bowl, a lighting state of the reflector bowl, on and off modes of the high-low beam module, a lighting mode of the high-low beam module and lighting on and off of the ambient light claw.

12. The lighting control method for the vehicle lamp according to claim 11, wherein the lighting mode comprises:
a basic low-beam mode, closing the reflector bowl and controlling low beam of the high-low beam module to light up;
a basic high-beam mode, closing the reflector bowl and controlling high beam of the high-low beam module to light up;
a low-beam boosting mode, opening the reflector bowl and controlling the low beam of the high-low beam module to light up, to light up the low-beam boosting reflector bowl;
a low-beam widening mode, opening the reflector bowl and controlling the low beam of the high-low beam module to light up, to light up the low-beam widening reflector bowl;
a high-beam boosting and widening mode, opening the reflector bowl and controlling the high beam of the high-low beam module to light up, to light up the high beam boosting and widening reflector bowl;
a cutoff-line brightness and sharpness enhancing mode, opening the reflector bowl and controlling the low beam of the high-low beam module to light up, to light up the cutoff-line brightness enhancing reflector bowl;
a low-beam dusk mode, opening the reflector bowl and controlling the low beam of the high-low beam module to light up, to light up the low-beam boosting reflector bowl, the low-beam widening reflector bowl, and the cutoff-line brightness enhancing reflector bowl;
a high-beam dusk mode, opening the reflector bowl and controlling the high beam of the high-low beam module to light up, to light up the high-beam boosting and widening reflector bowl;
a welcome mode, controlling the ambient light claw to dynamically light up in a spiral pattern or light up gradually around the high-low beam module, while opening the reflector bowl to light up the reflector bowl in the spiral pattern or gradually; and
a farewell mode, controlling the ambient light claw to dynamically light off in the spiral pattern or light off gradually around the high-low beam module, while closing the reflector bowl to light off the reflector bowl in the spiral pattern or gradually.
